# EUROPEAN PATENT APPLICATION

(11) **EP 4 632 368 A1**
(43) Date of publication of application: **15.10.2025**
(21) Application number: 25169574.8
(22) Date of filing: 09.04.2025
(51) Int. Cl.: G01N 29/12, G01N 29/22, G01N 29/24, G01N 29/34, G01N 29/36, G01N 29/44

(54) **INSPECTING INTERNAL POWERPLANT COMPONENT USING PIEZOELECTRIC DEVICE**

(30) Priority: 09.04.2024 US 202418630718
(71) Applicant: RTX Corporation, Farmington, CT 06032 (US)
(72) Inventor: CHEN, Yan, Farmington, 06032 (US); CHAUDHRY, Zaffir A., Farmington, 06032 (US); SUN, Fanping, Farmington, 06032 (US); ROELOFS, Andreas Karl, Farmington, 06032 (US)
(74) Representative: Dehns

(57) **Abstract**

An inspection method is provided during which a piezoelectric device (60) is arranged with a specimen component (22) of a powerplant (24). The arranging includes abutting the piezoelectric device (60) against a surface (50) of the specimen component (22). An electrical current is provided to the piezoelectric device (60) at a (e.g., fixed) electrical voltage. The providing of the electrical current to the piezoelectric device (60) energizes the piezoelectric device (60) and induces vibrations in the component (22) across a frequency range. The electrical current provided to the piezoelectric device (60) during the energizing of the piezoelectric device (60) and the inducing of the vibrations in the specimen component (22) is monitored to determine a plurality of measured resonant frequencies of the specimen component (22) within the frequency range. A measured resonance signature (300) for the specimen component (22) is determined based on the measured resonant frequencies of the specimen component (22).

## Description

### BACKGROUND OF THE DISCLOSURE

### 1. Technical Field

This disclosure relates generally to inspection and, more particularly, to nondestructive inspection for internal defects.

### 2. Background Information

Various systems and methods are known in the art for inspecting a component for internal defects. While these known inspection systems and methods have various benefits, there is still room in the art for improvement.

### SUMMARY OF THE DISCLOSURE

According to an aspect of the present disclosure, an inspection method is provided during which a piezoelectric device is arranged with a specimen component of a powerplant. The arranging includes abutting the piezoelectric device against a surface of the specimen component. An electrical current is provided to the piezoelectric device at a (e.g., fixed) electrical voltage. The providing of the electrical current to the piezoelectric device energizes the piezoelectric device and induces vibrations in the component across a frequency range. The electrical current provided to the piezoelectric device during the energizing of the piezoelectric device and the inducing of the vibrations in the specimen component is monitored to determine a plurality of measured resonant frequencies of the specimen component within the frequency range. A measured resonance signature for the specimen component is determined based on the measured resonant frequencies of the specimen component.

According to another aspect of the present disclosure, another inspection method is provided during which a piezoelectric device is arranged with a specimen component of a powerplant. The arranging includes abutting the piezoelectric device against a surface of the specimen component. An electrical current is provided to the piezoelectric device. The providing of the electrical current to the piezoelectric device energizes the piezoelectric device and induces vibrations in the component across a frequency range. The electrical current provided to the piezoelectric device during the energizing of the piezoelectric device at a fixed voltage and the inducing of the vibrations in the specimen component is measured to determine a plurality of measured resonant frequencies of the specimen component within the frequency range. Presence of an internal defect within the specimen component is detected by respectively comparing the measured resonant frequencies of the specimen component to a plurality of model resonant frequencies of a model component.

According to still another aspect of the present disclosure, a system is provided for inspecting a component within an interior of a powerplant. This system includes an inspection scope, a second system and a processing system. A head of the inspection scope includes a piezoelectric device. The inspection scope is configured for insertion of the head of the inspection scope into the interior of the powerplant to abut the piezoelectric device against a surface of the component. The piezoelectric device is configured to induce vibrations in the component across a frequency range upon provision of an electrical current to the piezoelectric device. The sensor system is configured to monitor the electrical current provided to the piezoelectric device during energizing of the piezoelectric device with the electrical current and the inducement of the vibrations in the component to determine a plurality of measured resonant frequencies of the component within the frequency range. The processing system is configured to detect presence of an internal defect within the component by respectively comparing the measured resonant frequencies of the component to a plurality of model resonant frequencies of a model component.

The following optional features may be applied to any of the above aspects.

The piezoelectric device may only include a piezoelectric stack or a single crystal piezoelectric device.

The internal defect may have a dimension equal to or less than one hundred and fifty mils.

The internal defect may have a dimension equal to or less than one hundred mils.

The internal defect may have a dimension equal to or less than fifty mils.

The inspection method may also include determining a characteristic of the specimen component by comparing the measured resonance signature for the specimen component to a model resonance signature for a model component. The specimen component and the model component may comprise a common configuration.

The model component may be a computer modeled component.

The model component may be a previously inspected component.

The comparing of the measured resonance signature for the specimen component to the model resonance signature for the model component may include comparing the measured resonant frequencies of the specimen component to a plurality of model resonant frequencies of the model component.

The inspection method may also include determining the specimen component meets a component specification when the measured resonant frequencies of the specimen component respectively match, or are within tolerance of, the model resonant frequencies of the model component.

The inspection method may also include determining the specimen component does not meet a component specification when at least one of the measured resonant frequencies of the specimen component does not match, or is outside of tolerance of, a respective one of the model resonant frequencies of the model component.

The characteristic may be indicative of a composition of material within the specimen component without an internal defect.

The characteristic may be indicative of a composition of material within the specimen component with an internal defect.

The inspection method may also include identifying presence of a defect internal to the specimen component by comparing the measured resonance signature for the specimen component to a model resonance signature for a model component. The specimen component and the model component may share a common manufacturer component identification.

The inspection method may also include inserting a head of an inspection scope into an interior of the powerplant. The head of the inspection scope may be configured with the piezoelectric device. The specimen component may be disposed within the interior of the powerplant during the inducing of the vibrations in the specimen component.

The arranging of the piezoelectric device may include abutting the piezoelectric device against the surface of the specimen component and fixing a position of the head of the inspection scope within the interior of the powerplant to maintain contact and a preload between the piezoelectric device and the surface of the specimen component during the inducing of the vibrations in the specimen component.

The powerplant may be installed with an aircraft during the inserting, the arranging and the inducing of the vibrations in the specimen component.

A lower bound of the frequency range may be equal to or greater than thirty kilohertz.

The piezoelectric device may be configured as or otherwise include a piezoelectric stack.

The piezoelectric device may be configured as or otherwise include a piezoelectric patch.

The piezoelectric device may be configured as or otherwise include a single crystal piezoelectric device.

The powerplant may be configured as or otherwise include a turbine engine.

The specimen component may be configured as a rotor disk.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for inspecting a component of a powerplant.
FIG. 2 is a flow diagram of a method for inspecting a component of a powerplant.
FIGS. 3A and 3B are graphs of various measured resonant signatures compared to a model resonant signature.
FIGS. 4-8 are partial schematic illustrations of the inspection system with various inspection scope head arrangements.

### DETAILED DESCRIPTION

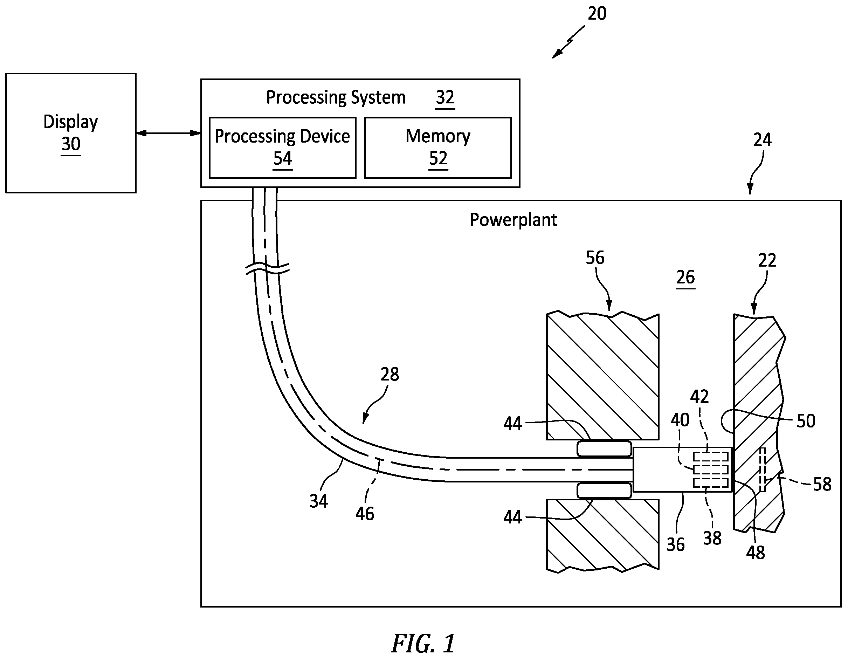

FIG. 1 illustrates a system 20 for inspecting a component 22 of a powerplant 24 for an aircraft. The aircraft may be an airplane, a helicopter, a drone (e.g., an unmanned aerial vehicle (UAV)) or any other manned or unmanned aerial vehicle or system. The aircraft powerplant 24 may be configured as, or otherwise included as part of, a propulsion system for the aircraft. The aircraft powerplant 24, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant 24 may alternatively be configured as, or otherwise included as part of, a power generation system for the aircraft. The aircraft powerplant 24, for example, may be an auxiliary power unit (APU) or any other type of gas turbine engine configured to mechanically power operation of an electrical generator. The present disclosure, however, is not limited to such exemplary aircraft powerplants. The inspection systems and methods of the present disclosure, for example, may also be used for inspecting components of other types of internal combustion engines and/or components of various other types of power units; e.g., an electric machine, a hybrid-electric power unit, etc.

The inspection system 20 is configured to facilitate inspection of the powerplant component 22 while that powerplant component 22 remains installed with the aircraft powerplant 24. The powerplant component 22 of FIG. 1, for example, is disposed within an interior 26 (e.g., an enclosed volume, an encased volume, etc.) of the aircraft powerplant 24. The inspection system 20 is also configured to facilitate inspection of the powerplant component 22 while the aircraft powerplant 24 remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant 24 when that aircraft powerplant 24 is not installed with the aircraft; e.g., prior to installation with the aircraft or following removal from the aircraft.

The powerplant component 22 may be any inspectable (e.g., metal) component within the aircraft powerplant 24. However, for ease of description, the powerplant component 22 may be described below as a rotor disk of a bladed rotor within a gas turbine engine, and the aircraft powerplant 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present disclosure, however, is not limited to such exemplary powerplant component configurations. The powerplant component 22, for example, may alternatively be configured as a hub, a shaft or any rotating component within the aircraft powerplant 24.

The inspection system 20 may be configured as a borescope inspection system. The inspection system 20 of FIG. 1, for example, includes an electronic inspection scope 28 (e.g., a borescope), a display 30 (e.g., a screen, a monitor, a touch screen, etc.) and a processing system 32.

The inspection scope 28 includes a scope body 34 (e.g., a tether), a scope head 36, a scope sensor 38, a vibration actuator 40 and a vibration sensor 42. The inspection scope 28 of FIG. 1 also includes a scope anchor 44.

The scope body 34 extends longitudinally along a longitudinal centerline 46 of the inspection scope 28 from a base end of the inspection scope 28 to the scope head 36. The scope body 34 is a flexible body. The scope body 34 may include one or more internal actuators for manipulating a configuration of the inspection scope 28 and its scope body 34 to aid in maneuvering the scope head 36 within the interior 26 of the aircraft powerplant 24 to the powerplant component 22.

The scope head 36 is disposed at a distal end 48 of the inspection scope 28. The scope sensor 38, the vibration actuator 40 and the vibration sensor 42 are each arranged with (e.g., mounted to and/or disposed in) the scope head 36. The scope sensor 38, the vibration actuator 40 and/or the vibration sensor 42 may also each be disposed at (e.g., on, adjacent or proximate) the scope distal end 48. The scope sensor 38 is configured to aid in the maneuvering of the scope head 36 within the interior 26 of the aircraft powerplant 24 to the powerplant component 22. The scope sensor 38, for example, may be configured as a camera (e.g., a still image camera and/or a video camera), a proximity sensor, or the like which (e.g., in real time) locates the scope head 36 during the maneuvering of the scope head 36, within the interior 26 of the aircraft powerplant 24, to the powerplant component 22. The vibration actuator 40 is configured to induce vibrations in the powerplant component 22 based on a control signal received from the processing system 32. The vibration sensor 42 is configured to measure a vibratory response in the powerplant component 22 excited by the vibrations induced by the vibration actuator 40. The vibration sensor 42 is further configured to provide sensor data (e.g., an output signal or signals) to the processing system 32 indicative of the measured vibratory response.

The scope anchor 44 may be arranged with the scope head 36, or arranged with the scope body 34 next to or otherwise near the scope head 36. The scope anchor 44 is configured to anchor the inspection scope 28 within the aircraft powerplant 24 to fix a position of the scope head 36 within the interior 26 of the aircraft powerplant 24 relative to the powerplant component 22. Moreover, the scope anchor 44 is configured to maintain engagement (e.g., contact and a preload) between the scope head member(s) 40 and/or 42 and a surface 50 of the powerplant component 22 once the scope head 36 is in its fixed position next to the powerplant component 22 within the interior 26 of the aircraft powerplant 24. The scope anchor 44, for example, may be configured as an expandable device, an electromagnet, or the like. The present disclosure, however, is not limited to the foregoing exemplary scope anchor configurations.

The processing system 32 is configured in signal communication (e.g., hardwired and/or wirelessly coupled) with the inspection scope 28 and its scope members 38, 40 and 42 as well as the display 30. The processing system 32 of FIG. 1 may be in signal communication with the scope members 38, 40 and 42 through one or more (e.g., electrically conductive and/or optical) signal paths extending within the scope body 34. The processing system 32 may be implemented with a combination of hardware and software. The hardware may include memory 52 and at least one processing device 54, which processing device 54 may include one or more single-core and/or multi-core processors. The hardware may also or alternatively include analog and/or digital circuitry other than that described above.

The memory 52 is configured to store software (e.g., program instructions) for execution by the processing device 54, which software execution may control and/or facilitate performance of one or more operations such as those described below. The memory 52 may be a non-transitory computer readable medium. For example, the memory 52 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

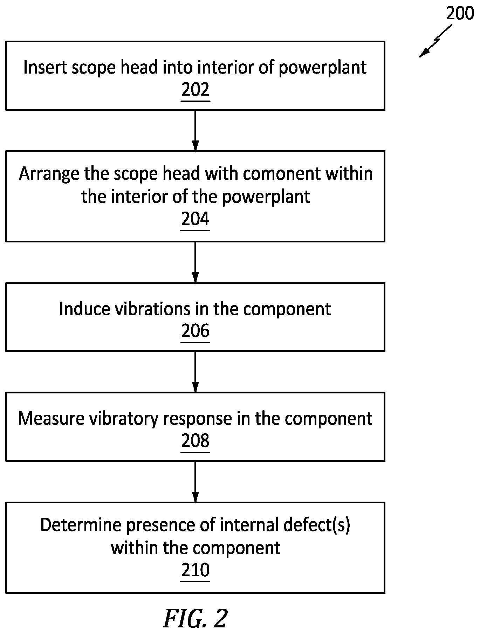

FIG. 2 is a flow diagram of a method 200 for inspecting the powerplant component 22 - a specimen component to be inspected. For ease of description, the inspection method 200 is described below with reference to the inspection system 20 of FIG. 1. The powerplant component 22 is also described below as being installed with the aircraft powerplant 24 and disposed within the interior 26 of the aircraft powerplant 24, where the aircraft powerplant 24 remains installed onboard the aircraft. The inspection method 200 of the present disclosure, however, may alternatively be performed with other inspection systems and/or while the aircraft powerplant 24 is removed from the aircraft.

In step 202, the scope head 36 is inserted into the interior 26 of the aircraft powerplant 24. An access cover, a powerplant component and/or the like, for example, may be removed from the aircraft powerplant 24 or opened to provide an access port into the interior 26 of the aircraft powerplant 24. The scope head 36 may then be passed through the access port into the interior 26 of the aircraft powerplant 24.

In step 204, the scope head 36 is arranged with the powerplant component 22 within the interior 26 of the aircraft powerplant 24. The inspection scope 28 may be maneuvered (e.g., passed through one or more passages, ducts, conduits, plenums, ports, etc. within the aircraft powerplant 24), for example, to locate the scope head 36 next to the powerplant component 22. More particularly, the scope head member(s) 40 and/or 42 may be abutted against the powerplant component 22, where each respective scope head member 40, 42 contacts the surface 50 of the powerplant component 22. The inspection scope 28 may also be maneuvered to apply a preload between the scope head member(s) 40 and/or 42 and the surface 50 of the powerplant component 22. Of course, the preload may also or alternatively be provided with a spring element or another biasing device separate than or incorporated into the scope anchor 44. This preload may be equal to or greater than one or two pounds (1-2 lbs); e.g., between one and one-half pounds (1.5 lbs) and four and one-half pounds (4.5 lbs). The present disclosure, however, is not limited to such an exemplary preload. Following this locating of the scope head 36 and its scope head member(s) 40 and/or 42 relative to the powerplant component 22 and following (or concurrently with) application of the preload, the position of the scope head 36 and its scope head member(s) 40 and/or 42 may be fixed using the scope anchor 44. For example, the scope anchor 44 may temporarily mount the inspection scope 28 to another component 56 within the interior 26 of the aircraft powerplant 24 that is next to or near the powerplant component 22 to be inspected. For example, where the powerplant component 22 is the rotor disk, the other component 56 may be a support frame or other stationary structure within the gas turbine engine that is next to the rotor disk. By temporarily mounting the inspection scope 28 to the other component 56, the contact and the preload between the scope head member(s) 40 and/or 42 and the surface 50 of the powerplant component 22 may be maintained (e.g., without interruption) during one or more of the following steps; e.g., during the steps 206 and 208.

In step 206, vibrations are induced in the powerplant component 22 using the vibration actuator 40. The processing system 32, for example, may signal the vibration actuator 40 to vibrate (e.g., via a control signal or provision of an electrical current (e.g., at a fixed voltage)), and the vibration of the vibration actuator 40 may be transmitted into the powerplant component 22 through the preloaded contact between the vibration actuator 40 and the surface 50 of the powerplant component 22. The vibrations may be induced to sweep across a range of frequencies during the step 206; e.g., a five kilohertz (5 kHz) range, a ten kilohertz (10 kHz) range, a twenty kilohertz (20 kHz) range, or any other suitable range which will facilitate mapping of a response signature as described below.

In step 208, a vibratory response is measured in the powerplant component 22 using the vibration sensor 42. This vibratory response is induced by the vibrations transmitted into the powerplant component 22 by the vibration actuator 40. The vibration sensor 42 then generates the sensor data indicative of the measured vibratory response, and provides the sensor data to the processing system 32.

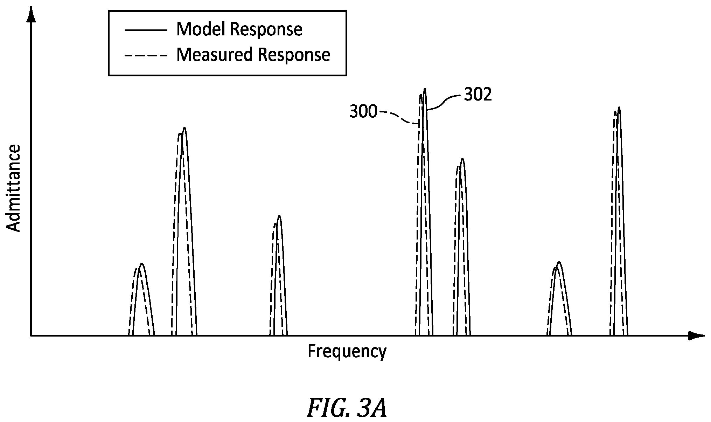

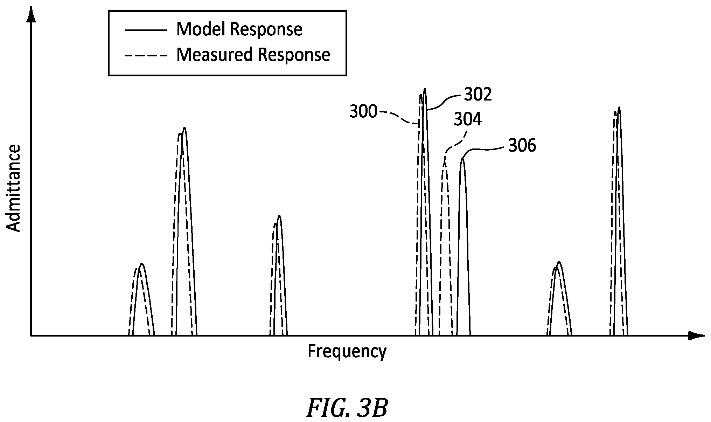

In step 210, the sensor data is processed to determine whether or not the powerplant component 22 includes any internal defects 58 - defects such as cracks, voids, etc. internal to (e.g., embedded within material of) the powerplant component 22. The processing system 32, for example, may analyze the measured vibratory response to determine resonant frequencies and/or other structural mode parameters for the powerplant component 22. Referring to FIG. 3A, where these resonant frequencies (or other structural mode parameters) match (or are within tolerance of) corresponding expected resonant frequencies (or other structural mode parameters) for a model component (e.g., a computer modeled component, a previously inspected component, etc.) without any internal defects, the processing system 32 may determine the powerplant component 22 does not include, or there is a low probability that the powerplant component 22 includes, any internal defects. For example, a measured resonance signature 300 of the measured resonant frequencies in FIG. 3A is the same as, or is within tolerance of, a model resonance signature 302 of expected resonant frequencies for the model component without any internal defects. Note, the matching model and measured responses are shown in FIGS. 3A and 3B slightly laterally offset for clarity of illustration. By contrast referring to FIG. 3B, where one or more of the resonant frequencies and/or other structural mode parameters do not match (or are outside tolerance of) the corresponding expected resonant frequencies and/or other structural mode parameters for the model component without any internal defects, the processing system 32 may determine the powerplant component 22 does include, or there is a high probability that the powerplant component 22 includes, one or more internal defects. For example, the resonance signature 300 of the measured resonant frequencies in FIG. 3B includes an outlier resonant frequency 304 which is different than (e.g., does not align with) and is outside of tolerance of a corresponding resonant frequency 306 for the resonance signature 302 of the expected resonant frequencies for the model component without any internal defects. **In** the foregoing example, the powerplant component 22 and the model component have a common (e.g., the same) configuration and, thus, may share a common manufacturer component identification such as the same part number, the same assembly number, etc. Using this methodology, the inspection method 200 and the inspection system 20 may non-destructively identify presence of internal defect(s) 58 within the powerplant component 22 while that powerplant component 22 remains installed with the aircraft powerplant 24 and/or the aircraft powerplant 24 remains installed onboard the aircraft.

When the step 210 identifies presence of no internal defects in material of the powerplant component 22, information indicative of such may be presented on the display 30. This information may simply identify the presence of no internal defects. The information may also or alternatively indicate the inspected powerplant component 22 meets / is within a component specification (e.g., a design specification) for that powerplant component 22. The aircraft powerplant 24 may then be identified as being ready for continued operation assuming, for example, no other regular scheduled maintenance tasks and/or inspections need to be performed. Similarly, when the step 210 identifies the presence of internal defect(s) 58, information indicative of such may be presented on the display 30. This information may simply identify the presence of internal defects. The information may also or alternatively indicate the inspected powerplant component 22 does not meet / is outside of the component specification for that powerplant component 22. Inspection personnel may then take appropriate next steps to further inspect the powerplant component 22 and/or initiate a process for swapping out the aircraft powerplant 24, repairing the powerplant component 22 or replacing the powerplant component 22. While the inspection method 200 is described above identifying whether or not the inspected powerplant component 22 includes any internal defects, this inspection method 200 may also (or alternatively) be extended to determine one or more other physical characteristics about the inspected powerplant component 22.

In some embodiments, the vibrations induced in the powerplant component 22 during the step 206 may have a frequency equal to or greater than thirty kilohertz (30 kHz); e.g., equal to or greater than forty kilohertz (40 kHz) or fifty kilohertz (50 kHz) up to about two hundred and fifty kilohertz (250kHz). This frequency may be a lower bound, an upper bound or an intermediate frequency within the range of frequencies swept during the vibration inducement step 206. By vibrating the powerplant component 22 at such a relatively high frequency, the inspection method 200 and/or the inspection system 20 may detect one or more internal defects 58 with a dimension (e.g., a width, a length, etc.) equal to or less than one hundred mils (0.10 inches) or one hundred and fifty miles (0.15 inches). More particularly, the inspection method 200 and/or the inspection system 20 may detect one or more internal defects 58 with a relatively small dimension equal to or less than fifty mils (0.05 inches); e.g., equal to or less than forty mils (0.04 inches). Here, the powerplant component 22 is constructed from a metal It is contemplated, however, the vibrations may alternatively be induced at a frequency below thirty kilohertz (30 kHz) when detecting larger internal defect(s) within the powerplant component 22 and/or when inspecting a powerplant component with another material construction.

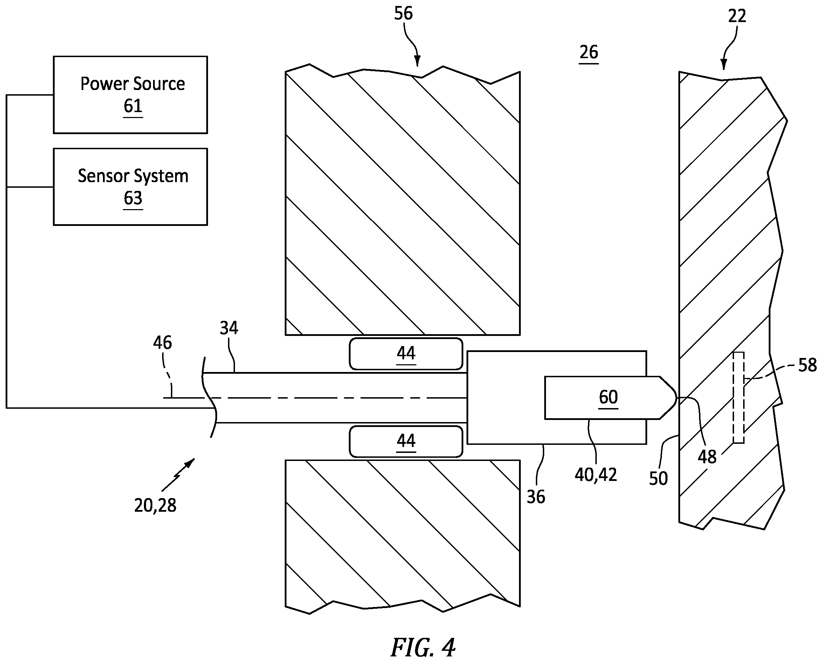

In some embodiments, referring to FIG. 4, the vibration sensor 42 may be integrated with the vibration actuator 40 in a single inspection device. The vibration sensor 42 and the vibration actuator 40 of FIG. 4, for example, may be integrated into a single piezoelectric device 60. This piezoelectric device 60 may be configured as or otherwise include a piezoelectric stack. Such a piezoelectric stack may include a longitudinal stack (or multiple layers) of piezoelectric actuators. Alternatively, the piezoelectric device 60 may be configured as or otherwise include a piezoelectric patch. Still alternatively, the piezoelectric device 60 may be configured as or otherwise include a single crystal piezoelectric device. Such a single crystal piezoelectric device may include a piezoelectric ceramic element with a single crystal orientation and no grain boundaries. In general, the single crystal piezoelectric device may provide higher power and greater sensitivity than a comparable piezoelectric stack.

With the single piezoelectric device 60 in FIG. 4, the vibratory response of the powerplant component 22 may be measured using the piezoelectric device 60 concurrently with the inducement of the vibrations in the powerplant component 22 by the piezoelectric device 60. The inspection system 20, for example, may utilize a coupled electro-mechanical impedance methodology that monitors electrical current provided to the piezoelectric device 60 to measure the vibratory response of the powerplant component 22. The electrical current and voltage used for energizing the piezoelectric device 60 of FIG. 4 to vibrate the powerplant component 22 is provided to the piezoelectric device 60 by a power source 61, which power source 61 may be part of or controlled by the processing system 32 (see FIG. 1). The electrical current is measured by a sensor system 63, which sensor system 63 may be part of or in signal communication with the processing system 32 (see FIG. 1). Here, it is worth noting that impedance (inverse of admittance) is equal to electrical voltage divided by the electrical current (Z=V/I). The impedance is also related to a frequency of the vibrations induced in the powerplant component 22 by the piezoelectric device 60. Monitoring the electrical current provided to the piezoelectric device 60 therefore may provide information regarding the frequency of the vibrations induced in the powerplant component 22. For example, as the induced vibrations approach and reach a resonant frequency of the powerplant component 22, the electrical current provided to the piezoelectric device 60 may change; e.g., decrease. By monitoring and tracking these changes in the electrical current provided to the piezoelectric device 60, the processing system 32 may determine and map the resonant frequencies of the powerplant component 22 within the range of frequencies swept during the vibration inducement step 206. This map of the resonant frequencies is indicative of the resonance signature for the powerplant component 22 and may be utilized for the processing step 210 described above.

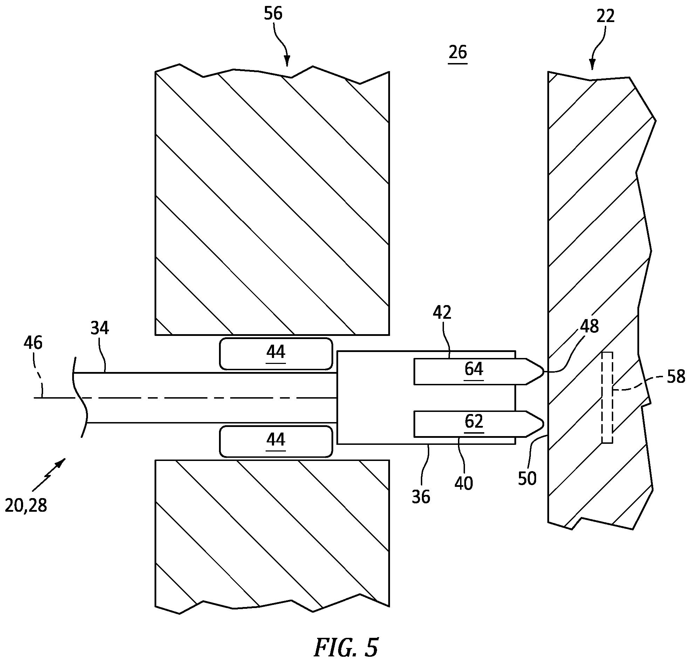

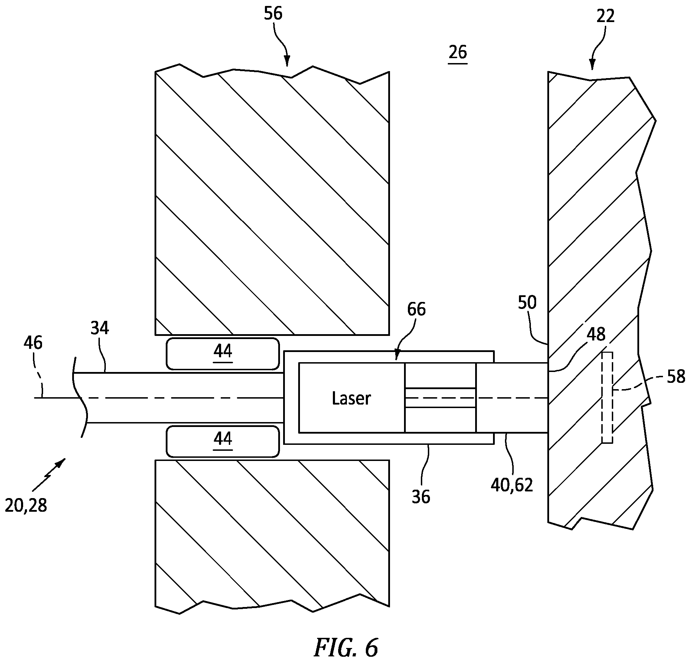

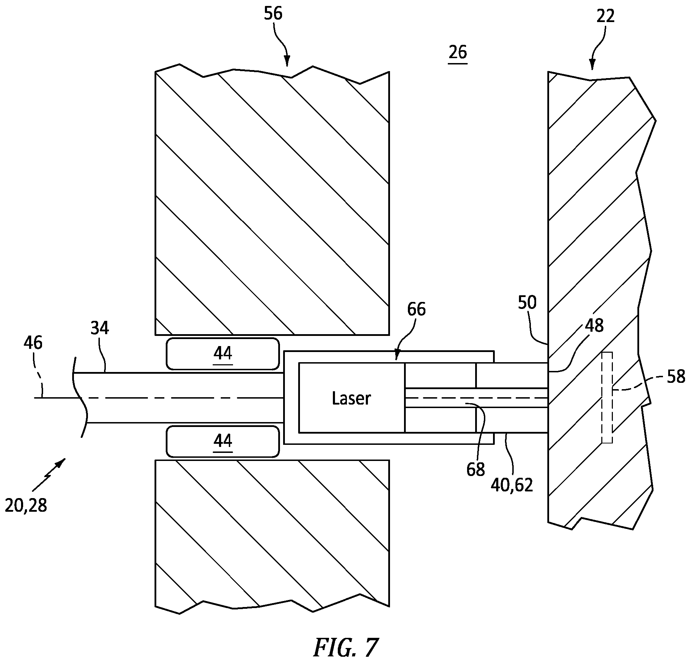

In some embodiments, referring to FIGS. 5-7, the vibration actuator 40 and the vibration sensor 42 may alternatively be configured as separate inspection devices. The vibration actuator 40, for example, may be configured as or otherwise include a piezoelectric device 62 such as a piezoelectric stack or a single crystal piezoelectric device. Similarly, referring to FIG. 5, the vibration sensor 42 may be configured as or otherwise include another piezoelectric device 64 such as a piezoelectric stack or a single crystal piezoelectric device. Alternatively, referring to FIGS. 6 and 7, the vibration sensor 42 may be configured as a fiber optic laser vibrometer 66. **In** FIGS. 6 and 7, the laser vibrometer 66 is arranged coaxial with the vibration actuator 40. The piezoelectric device 62 of the vibration actuator 40 of FIG. 6, for example, is constructed from an optically transparent material. The laser vibrometer 66 may thereby optically measure the vibratory response in the powerplant component 22 through the optically transparent piezoelectric device 62. **In** another example, referring to FIG. 7, a bore 68 extends longitudinally through the vibration actuator 40 and its piezoelectric device 62. The laser vibrometer 66 may thereby optically measure the vibratory response in the powerplant component 22 through the actuator bore 68.

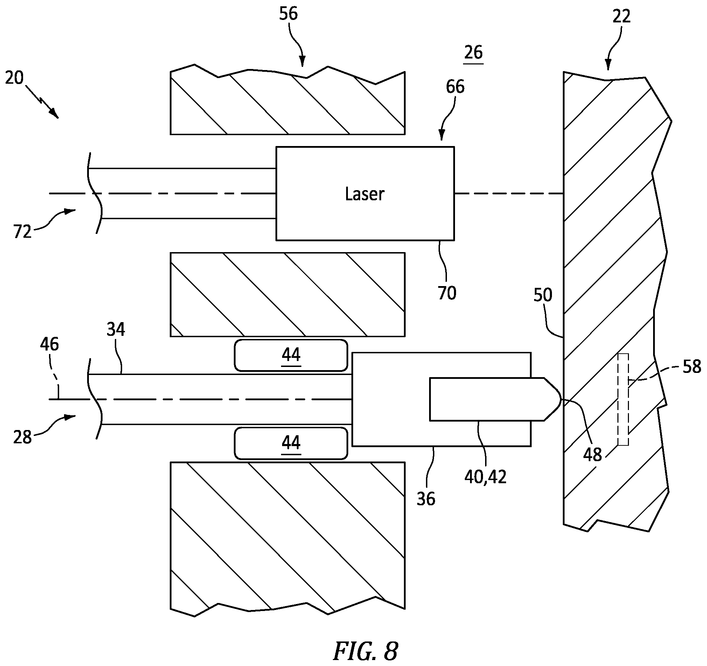

In some embodiments, referring to FIGS. 1 and 4-7, the scope head 36 may be configured with both the vibration actuator 40 and the vibration sensor 42. In other embodiments, referring to FIG. 8, the scope head 36 may (e.g., only) be configured with the vibration actuator 40. The vibration sensor 42 of FIG. 8, on the other hand, is configured with a scope head 70 of another inspection scope 72.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An inspection method, comprising:
arranging a piezoelectric device (60; 62) with a specimen component (22) of a powerplant (24), the arranging comprising abutting the piezoelectric device (60; 62) against a surface (50) of the specimen component (22);
providing an electrical current to the piezoelectric device (60; 62) at a fixed electrical voltage, the providing of the electrical current to the piezoelectric device (60; 62) energizing the piezoelectric device (60; 62) and inducing vibrations in the component (22) across a frequency range;
monitoring the electrical current provided to the piezoelectric device (60; 62) during the energizing of the piezoelectric device (60; 62) and the inducing of the vibrations in the specimen component (22) to determine a plurality of measured resonant frequencies of the specimen component (22) within the frequency range; and
determining a measured resonance signature (300) for the specimen component (22) based on the plurality of measured resonant frequencies of the specimen component (22).

2. The inspection method of claim 1, further comprising determining a characteristic of the specimen component (22) by comparing the measured resonance signature (300) for the specimen component (22) to a model resonance signature (302) for a model component, wherein the specimen component (22) and the model component comprise a common configuration.

3. The inspection method of claim 2, wherein:
the model component is a computer modeled component; or
the model component is a previously inspected component.

4. The inspection method of claim 2 or 3, wherein the comparing of the measured resonance signature (300) for the specimen component (22) to the model resonance signature (302) for the model component comprises comparing the plurality of measured resonant frequencies of the specimen component (22) to a plurality of model resonant frequencies of the model component.

5. The inspection method of claim 4, further comprising determining the specimen component (22) does not meet a component specification when at least one of the plurality of measured resonant frequencies of the specimen component (22) does not match, or is outside of tolerance of, a respective one of the plurality of model resonant frequencies of the model component.

6. The inspection method of any of claims 2 to 5, wherein the characteristic is indicative of a composition of material within the specimen component (22) with an internal defect (58).

7. The inspection method of any preceding claim, further comprising identifying presence of a defect (58) internal to the specimen component (22) by comparing the measured resonance signature (300) for the specimen component (22) to a model resonance signature (302) for a model component, wherein the specimen component (22) and the model component share a common manufacturer component identification.

8. The inspection method of any preceding claim, further comprising inserting a head (36) of an inspection scope (28) into an interior (26) of the powerplant (24), the head of the inspection scope (28) configured with the piezoelectric device (60; 62), and the specimen component (22) disposed within the interior (26) of the powerplant (24) during the inducing of the vibrations in the specimen component (22).

9. The inspection method of claim 8, wherein the arranging of the piezoelectric device (60; 62) includes abutting the piezoelectric device (60; 62) against the surface (50) of the specimen component (22; 56) and fixing a position of the head (36) of the inspection scope (28) within the interior (26) of the powerplant (24) to maintain contact and a preload between the piezoelectric device (60; 62) and the surface (50) of the specimen component (22) during the inducing of the vibrations in the specimen component (22).

10. The inspection method of claim 8 or 9, wherein the powerplant (24) is installed with an aircraft during the inserting, the arranging and the inducing of the vibrations in the specimen component (22).

11. The inspection method of any preceding claim, wherein a lower bound of the frequency range is equal to or greater than thirty kilohertz.

12. The inspection method of any preceding claim, wherein:
the piezoelectric device (60; 62) comprises a piezoelectric stack or a piezoelectric patch; or
the piezoelectric device (60; 62) comprises a single crystal piezoelectric device.

13. The inspection method of any preceding claim, wherein the powerplant (24) comprises a turbine engine,
wherein, optionally, the specimen component (22) is configured as a rotor disk.

14. An inspection method, comprising:
arranging a piezoelectric device (60; 62) with a specimen component (22) of a powerplant (24), the arranging comprising abutting the piezoelectric device (60; 62) against a surface (50) of the specimen component (22);
providing an electrical current to the piezoelectric device (60; 62), the providing of the electrical current to the piezoelectric device (60; 62) energizing the piezoelectric device (60; 62) and inducing vibrations in the component (22) across a frequency range;
measuring the electrical current provided to the piezoelectric device (60; 62) during the energizing of the piezoelectric device (60; 62) at a fixed voltage and the inducing of the vibrations in the specimen component (22) to determine a plurality of measured resonant frequencies of the specimen component (22) within the frequency range; and
detecting presence of an internal defect within the specimen component (22) by respectively comparing the plurality of measured resonant frequencies of the specimen component (22) to a plurality of model resonant frequencies of a model component,
wherein, optionally, the internal defect (58) has a dimension equal to or less than one hundred and fifty mils.

15. A system (20) for inspecting a component (22) within an interior (26) of a powerplant (24), the system (20) comprising:
an inspection scope (28), a head (36) of the inspection scope (28) including a piezoelectric device (60; 62), the inspection scope (28) configured for insertion of the head (36) of the inspection scope (28) into the interior (26) of the powerplant (24) to abut the piezoelectric device (60; 62) against a surface (50) of the component (22), the piezoelectric device (60; 62) configured to induce vibrations in the component (22) across a frequency range upon provision of an electrical current to the piezoelectric device (60; 62);
a sensor system (63) configured to monitor the electrical current provided to the piezoelectric device (60; 62) during energizing of the piezoelectric device (60; 62) with the electrical current and the inducement of the vibrations in the component (22) to determine a plurality of measured resonant frequencies of the component (22) within the frequency range; and
a processing system (32) configured to detect presence of an internal defect within the component (22) by respectively comparing the plurality of measured resonant frequencies of the component (22) to a plurality of model resonant frequencies of a model component,
wherein, optionally, the piezoelectric device (60; 62) consists of a piezoelectric stack or a single crystal piezoelectric device.
